# EUROPÄISCHE PATENTSCHRIFT

(11) **EP 3 146 586 B1**
(45) Veröffentlichungstag und Bekanntmachung des Hinweises auf die Patenterteilung: **14.08.2019**
(21) Anmeldenummer: 15722159.9
(22) Anmeldetag: 07.05.2015
(51) Int. Cl.: H01M 8/00, H01M 8/0271, H01M 8/243, H01M 8/2485

(54) **BRENNSTOFFZELLENVORRICHTUNG**
FUEL CELL DEVICE
DISPOSITIF DE PILES À COMBUSTIBLE

(30) Priorität: 22.05.2014 DE 102014209754
(43) Veröffentlichungstag der Anmeldung: 29.03.2017
(73) Patentinhaber: Robert Bosch GmbH, 70442 Stuttgart (DE)
(72) Erfinder: SCHULZE, Andreas, 70176 Stuttgart (DE); SCHUELKE, Armin, 71277 Rutesheim-Heuweg (DE); KNEULE, Friedrich, 71277 Rutesheim (DE)
(86) Internationale Anmeldenummer: PCT/EP2015/060045
(87) Internationale Veröffentlichungsnummer: WO 2015/176964

(56) Entgegenhaltungen:
- EP-A1- 1 325 774
- EP-A2- 0 932 214
- WO-A1-2009/119310
- DE-A1- 3 139 957
- DE-A1-102010 001 800

## Beschreibung

### Stand der Technik

Die Erfindung betrifft eine Brennstoffzellenvorrichtung nach dem Oberbegriff des Patentanspruchs 1.

Es ist, z.B. aus der DE 31 39 957 A1 oder der DE 10 2010 001800 A1, bereits eine Brennstoffzellenvorrichtung mit einer Brennstoffzelleneinheit bekannt, welche zumindest einen Gasraum, welcher dazu vorgesehen ist, in zumindest einem Betriebszustand zumindest einen Reaktanten aufzunehmen, zumindest im Wesentlichen allseitig begrenzt. Zu einer Gaszuführung und/oder einer Gasrückführung zu und/oder von der Brennstoffzellenvorrichtung ist zusätzlich zu der Brennstoffzellenvorrichtung ein aufwändiger mehrlagiger Aufbau notwendig. Insbesondere eine ausreichende und insbesondere dauerhafte Abdichtung des Aufbaus ist mit einem hohen Aufwand verbunden.

### Offenbarung der Erfindung

Die Erfindung geht aus von einer Brennstoffzellenvorrichtung, insbesondere einer tubularen Brennstoffzellenvorrichtung, mit einer Brennstoffzelleneinheit, welche zumindest einen Gasraum, welcher dazu vorgesehen ist, in zumindest einem Betriebszustand zumindest einen Reaktanten aufzunehmen, zumindest im Wesentlichen allseitig begrenzt.

Die Brennstoffzelleneinheit umfasst zumindest einen Montagefuß welcher zumindest in einem montierten Zustand dazu vorgesehen ist, zumindest teilweise zumindest einen Kanal auszubilden, welcher zumindest zu einer Gasführung vorgesehen ist.

Unter einer "Brennstoffzellenvorrichtung" soll in diesem Zusammenhang insbesondere eine Vorrichtung verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische und/oder thermische Energie, umzuwandeln. Die zumindest eine Brennstoffzellenvorrichtung ist vorzugsweise als Festoxid-Brennstoffzelle (SOFC) ausgebildet. Unter einer "Brennstoffzelleneinheit" soll in diesem Zusammenhang insbesondere eine Einheit verstanden werden, welche insbesondere zumindest teilweise eine äußere Hülle der Brennstoffzellenvorrichtung ausbildet. Ferner kann die Brennstoffzelleneinheit insbesondere passive Elemente, insbesondere zu einer Gasführung und/oder -leitung und/oder zu einer Montage der Brennstoffzellenvorrichtung, umfassen. Unter einem "Reaktanten" soll in diesem Zusammenhang insbesondere ein chemischer Stoff und/oder ein chemisches Stoffgemisch verstanden werden, welcher und/oder welches insbesondere zu einer Verwendung bei einer chemischen Reaktion, insbesondere zu einer Verwendung in einem Syntheseprozess, insbesondere innerhalb der Brennstoffzellenvorrichtung, vorgesehen ist. Vorzugsweise handelt es sich bei dem zumindest einen Reaktanten um ein Brenngas oder um Sauerstoff oder um ein brenngashaltiges Gasgemisch oder um ein sauerstoffhaltiges Gasgemisch. Insbesondere ist das zumindest eine Synthesegas zur Synthese von Wasser und/oder Kohlenstoffdioxid innerhalb der zumindest einen Brennstoffzellenvorrichtung vorgesehen. Insbesondere wird der zumindest eine Reaktant während eines Betriebs der Brennstoffzellenvorrichtung insbesondere kontinuierlich dem zumindest einen Gasraum zugeführt. Unter einem "Gasraum" soll insbesondere ein räumlicher Bereich verstanden werden, der zumindest teilweise und vorzugsweise zumindest im Wesentlichen allseitig von einer sichtbaren Außenfläche gegenüberliegenden, insbesondere zumindest teilweise nicht sichtbarer Innenfläche der Brennstoffzelleneinheit begrenzt ist. Darunter, dass die Brennstoffzelleneinheit den zumindest einen Gasraum "zumindest im Wesentlichen allseitig begrenzt" soll insbesondere verstanden werden, dass eine gedachte, den zumindest einen Gasraum umgebende, geschlossene Hüllfläche zu zumindest 80 %, vorzugsweise zu zumindest 85 %, vorteilhaft zu zumindest 90 % und besonders vorteilhaft zu zumindest 95 % von einer durch die zumindest eine Brennstoffzelleneinheit gebildeten äußeren Hülle bedeckt ist. Unter einem "Montagefuß" soll in diesem Zusammenhang insbesondere ein vorzugsweise zumindest teilweise als ein Sockel und/oder als ein Flansch ausgebildeter Bereich der Brennstoffzelleneinheit verstanden werden, welcher insbesondere zu einer Montage und insbesondere zu einer Befestigung und/oder Abdichtung der Brennstoffzellenvorrichtung insbesondere innerhalb eines Brennstoffzellensystems vorgesehen ist. Darunter, dass der zumindest eine Montagefuß dazu vorgesehen ist, zumindest in einem montierten Zustand "zumindest teilweise zumindest einen Kanal auszubilden", soll insbesondere verstanden werden, dass der zumindest eine Montagefuß zumindest einen Kanalabschnitt und/oder zumindest ein Kanalsegment aufweist, welcher und/oder welches in einem montierten Zustand insbesondere durch zumindest eine weitere Einheit, insbesondere durch zumindest einen weiteren Montagefuß zumindest einer weiteren Brennstoffzellenvorrichtung und/oder durch zumindest eine Montageplatte, zu einem in Umfangsrichtung geschlossenen Kanal ergänzt ist. Unter einer "Umfangsrichtung" eines Objekts soll insbesondere eine azimutale, senkrecht zu einer Längserstreckungsrichtung des Objekts angeordnete Richtung verstanden werden. Unter einer "Längserstreckungsrichtung" eines Objekts soll insbesondere eine Richtung verstanden werden, welche parallel ist zu einer längsten Kante eines kleinsten gedachten Quaders, welcher das Objekt gerade noch umgibt. Vorzugsweise ist der zumindest eine Kanal dazu vorgesehen, zumindest ein Gas- und/oder Gasgemisch und/oder einen Dampf aus dem zumindest einen Gasraum abzuführen. Unter einer "Montageplatte" soll in diesem Zusammenhang insbesondere ein zumindest im Wesentlichen plattenförmiges Trägerelement verstanden werden, welches zu einer Montage zumindest einer Brennstoffzellenvorrichtung vorgesehen ist. Vorzugsweise weist die Montageplatte zumindest eine Montageaufnahme auf, welche dazu vorgesehen ist, die Brennstoffzellenvorrichtung in einem montierten Zustand zumindest teilweise aufzunehmen und/oder zu fixieren.

Durch eine derartige Ausgestaltung kann eine gattungsgemäße Brennstoffzellenvorrichtung mit verbesserten Eigenschaften hinsichtlich einer Ausbildung eines Kanals, insbesondere zu einer Ableitung eines Gas und/oder eines Gasgemischs und/oder eines Dampfs aus dem zumindest einen Gasraum, bereitgestellt werden. Ferner kann eine Gasführung und/oder eine Abdichtung einer Gasführung vorteilhaft vereinfacht werden, wodurch insbesondere ein Arbeitsaufwand und oder Fertigungskosten reduziert werden können.

Insbesondere kann die Brennstoffzelleneinheit einstückig ausgebildet sein. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorzugsweise ist die Brennstoffzelleneinheit jedoch mehrteilig ausgeführt. In diesem Zusammenhang wird vorgeschlagen, dass die Brennstoffzelleneinheit zumindest eine Abdeckhaube aufweist. Vorzugsweise ist die zumindest eine Abdeckhaube als ein Brennstoffzellentubus ausgebildet. Insbesondere umfasst die zumindest einen Abdeckhaube einen zumindest im Wesentlichen hohlzylindrischen Grundkörper. Insbesondere kann der Grundkörper eine zumindest im Wesentlichen runde, beispielsweise kreisförmige oder ovalförmige, und/oder eine polygone Grundfläche aufweisen. Insbesondere ist der Grundkörper an einem Ende zumindest im Wesentlichen geschlossen und vorzugsweise zumindest im Wesentlichen gasdicht ausgeführt. Der zumindest eine Montagefuß ist vorzugsweise an einem offenen Ende der zumindest einen Abdeckhaube angeordnet und einstückig mit dieser ausgebildet. Insbesondere ist der zumindest eine Montagefuß von einem zumindest im Wesentlichen gas- und/oder dampfdichten Material gebildet. Ferner wird vorgeschlagen, dass die Brennstoffzelleneinheit zumindest ein Zuströmelement aufweist. Unter einem Zuströmelement soll in diesem Zusammenhang insbesondere ein zumindest im Wesentlichen röhrenförmiges Element verstanden werden, welches dazu vorgesehen ist, zumindest in einem montierten Zustand zumindest teilweise in die zumindest eine Abdeckhaube, insbesondere in den Grundkörper der zumindest einen Abdeckhaube, hineinzuragen. Insbesondere begrenzen die zumindest eine Abdeckhaube und das zumindest eine Zuströmelement in einem montierten Zustand den zumindest einen Gasraum zumindest im Wesentlichen allseitig. Insbesondere ist das zumindest eine Zuströmelement dazu vorgesehen, in zumindest einem Betriebszustand den zumindest einen Reaktanten in den zumindest einen Gasraum zu leiten. Hierdurch kann eine Herstellung einer Brennstoffzelleneinheit vorteilhaft vereinfacht werden. Ferner können Fertigungskosten vorteilhaft reduziert werden.

Ferner wird vorgeschlagen, dass die Brennstoffzelleneinheit überall zumindest im Wesentlichen einen gleichen Wärmeausdehnungskoeffizienten aufweist. Darunter, dass die Brennstoffzelleneinheit "überall zumindest im Wesentlichen einen gleichen" Wärmeausdehnungskoeffizienten aufweist, soll insbesondere verstanden werden, dass der Wärmeausdehnungskoeffizient, insbesondere ein Längenausdehnungskoeffizient und/oder ein Raumausdehnungskoeffizient, der Brennstoffzelleneinheit, insbesondere zumindest eines Herstellungsmaterials der Brennstoffzelleneinheit, über die gesamte Erstreckung der Brennstoffzelleneinheit hinweg um weniger als 15 %, insbesondere um weniger als 10 %, vorzugsweise um weniger als 5 % und besonders bevorzugt um weniger als 1 % schwankt. Hierdurch können thermo-mechanische Spannungen innerhalb der zumindest einen Brennstoffzelleneinheit vorteilhaft reduziert werden.

Sind die zumindest eine Abdeckhaube und/oder das zumindest eine Zuströmelement und/oder der zumindest eine Montagefuß zumindest im Wesentlichen aus einem zumindest weitgehend identischen Material gebildet, so kann vorteilhaft ein Auftreten unterschiedlicher Wärmeausdehnungskoeffizienten insbesondere zwischen der zumindest einen Abdeckhaube und/oder dem zumindest einen Zuströmelement und/oder dem zumindest einen Montagefuß zumindest weitgehend verhindert werden. Darunter, dass die zumindest eine Abdeckhaube und/oder das zumindest eine Zuströmelement und/oder der zumindest eine Montagefuß zumindest im Wesentlichen aus einem "zumindest weitgehend identischen" Material ausgebildet sind, soll in diesem Zusammenhang insbesondere verstanden werden, dass das Material der zumindest einen Abdeckhaube in seiner stofflichen Zusammensetzung zumindest weitgehend und vorzugsweise exakt dem Material des zumindest einen Zuströmelements und/oder des zumindest einen Montagefußes entspricht. Darunter, dass ein Objekt "zumindest im Wesentlichen aus einem Material" gebildet ist, soll insbesondere verstanden werden, dass das Objekt mit einem Massenanteil von zumindest 75 %, vorteilhaft von zumindest 85 % und vorzugsweise von zumindest 95 % aus dem Material besteht. Vorzugsweise sind die zumindest eine Abdeckhaube und/oder das zumindest eine Zuströmelement und/oder der zumindest eine Montagefuß aus einem keramischen Material gebildet. Unter einem "keramischen Material" soll in diesem Zusammenhang insbesondere ein anorganisches, nichtmetallisches Material verstanden werden. Insbesondere kann das zumindest eine keramische Material zumindest teilweise kristallin sein. Unter "nichtmetallisch" soll in diesem Zusammenhang insbesondere verstanden werden, dass das zumindest eine keramische Material zumindest weitestgehen frei von insbesondere auf metallischen Bindungen beruhenden, metallischen Eigenschaften ist, jedoch Metallverbindungen, wie beispielsweise Metalloxide und/oder -silikate, umfassen kann. Hierdurch kann vorteilhaft einfach erreicht werden, dass die zumindest eine Brennstoffzelleneinheit überall einen gleichen Wärmeausdehnungskoeffizienten aufweist.

Ferner wird vorgeschlagen, dass das zumindest eine Zuströmelement zumindest eine erste Dichtfläche und die zumindest eine Abdeckhaube zumindest eine zu der zumindest einen ersten Dichtfläche korrespondierende zweite Dichtfläche aufweist. Insbesondere ist die zumindest eine erste Dichtfläche des zumindest einen Zuströmelements dazu vorgesehen, in einem montierten Zustand die zumindest eine korrespondierende zweite Dichtfläche des zumindest einen Brennstoffzellentubus zumindest im Wesentlichen dichtend zu kontaktieren. Zu einer Verbesserung einer Dichtwirkung kann zwischen die zumindest eine erste Dichtfläche und die zumindest eine zweite Dichtfläche eine Dichtmasse und/oder ein Dichtelemente eingebracht sein. Die Dichtmasse und/oder das Dichtelement können zumindest teilweise insbesondere aus Glas und/oder einem keramischen und/oder glaskeramischen und/oder einem anderen geeigneten, insbesondere anorganischen, Material bestehen. Unter "zumindest im Wesentlichen dichtend" soll in diesem Zusammenhang insbesondere Verstanden werden, dass ein Dichtbereich zwischen der zumindest einen ersten Dichtfläche der Abdeckhaube und der zumindest einen zweiten Dichtfläche des zumindest einen Zuströmelements eine Leckrate von maximal 10⁻⁶ Pa*m³/s, vorteilhaft von maximal 10⁻⁸ Pa*m³/s und vorzugsweise von maximal 10⁻¹⁰ Pa*m³/s aufweist. Hierdurch kann vorteilhaft eine Leckrate reduziert werden.

Des Weiteren wird vorgeschlagen, dass die zumindest eine Abdeckhaube wenigstens einen zumindest teilweise porös ausgebildeten Teilbereich aufweist. Insbesondere ist der zumindest eine Teilbereich offen porös ausgebildet. Unter einem "offen porösen Teilbereich" soll in diesem Zusammenhang insbesondere ein Bereich der zumindest einen Abdeckhaube verstanden werden, welcher Hohlräume aufweist, die insbesondere fluidtechnisch untereinander und/oder mit einer Umgebung in Verbindung stehen. Insbesondere ist der zumindest eine Teilbereich zur Zuführung zumindest eines zweiten, insbesondere gasförmigen Reaktanten, vorzugsweise Sauerstoff oder Luft, vorgesehen. Hierdurch kann der Brennstoffzellenvorrichtung auf vorteilhaft einfache Weise zumindest ein zweiter Reaktant zugeführt werden.

Über dies wird vorgeschlagen, dass die Brennstoffzellenvorrichtung zumindest eine Funktionsschicht aufweist, welche auf den wenigstens einen zumindest teilweise porös ausgebildeten Teilbereich aufgebracht ist. Unter einer "Funktionsschicht" soll in diesen Zusammenhang insbesondere eine Schicht verstanden werden, welche insbesondere zumindest eine Anode und zumindest eine Kathode sowie zumindest ein zwischen der zumindest einen Anode und der zumindest eine Kathode angeordnetes Elektrolyt aufweist. Insbesondere kann die zumindest eine Funktionsschicht auf einer Innenseite und/oder einer Außenseite der zumindest einen Abdeckhaube angeordnet sein. Vorzugsweise ist die zumindest eine Funktionsschicht vollständig auf einer Innenseite der zumindest einen Abdeckhaube angeordnet. Insbesondere weist die zumindest eine Funktionsschicht eine Schichtdicke von maximal 50 µm, vorteilhaft von maximal 25 µm und besonders vorteilhaft von maximal 15 µm auf. Hierdurch kann ein vorteilhafter Aufbau einer Brennstoffzellenvorrichtung erreicht werden.

Ferner wird ein Brennstoffzellensystem mit zumindest einer ersten erfindungsgemäßen Brennstoffzellenvorrichtungen und zumindest einer zweiten erfindungsgemäßen Brennstoffzellenvorrichtung vorgeschlagen, bei welchem zumindest ein Montagefuß der zumindest einen ersten Brennstoffzellenvorrichtung und zumindest ein Montagefuß der zumindest einen zweiten Brennstoffzellenvorrichtung gemeinsam zumindest einen geschlossenen Kanal ausbilden. Darunter, dass zumindest ein Montagefuß der zumindest einen ersten Brennstoffzellenvorrichtung und zumindest ein Montagefuß der zumindest zweiten Brennstoffzellenvorrichtung gemeinsam zumindest einen "geschlossenen Kanal ausbilden", soll insbesondere verstanden werden, dass sich jeweils zumindest ein Kanalabschnitt und/oder zumindest ein Kanalsegment der zumindest einen ersten Brennstoffzellenvorrichtung und der zumindest einen zweiten Brennstoffzellenvorrichtung zu zumindest einem in Umfangsrichtung geschlossenen Kanal ergänzen. Kontaktstellen zwischen den Montagefüßen der zumindest einen ersten Brennstoffzellenvorrichtung und der zumindest einen zweiten Brennstoffzellenvorrichtung sind vorzugsweise durch ein Dichtelement und/oder eine Dichtmasse abgedichtet. Hierdurch kann eine vorteilhaft einfache Gasführung innerhalb des Brennstoffzellensystems erreicht werden. Ferner kann ein Abdichtungskonzept vorteilhaft vereinfacht werden.

Des Weiteren wird vorgeschlagen, dass der zumindest eine Kanal zumindest eine Richtungsänderung aufweist. Die Richtungsänderung ist insbesondere dazu vorgesehen, einen Strömungsrichtung eines in zumindest einem Betriebszustand durch den zumindest einen Kanal strömenden Gases und/oder Gasgemischs und/oder Dampfs insbesondere bei einer Überleitung von dem zumindest einen Montagefuß der zumindest einen ersten Brennstoffzellenvorrichtung zu dem zumindest einen Montagefuß der zumindest einen zweiten Brennstoffzellenvorrichtung und/oder bei einer Ausleitung aus dem Brennstoffzellensystem in einem Winkel umzulenken, welcher insbesondere um maximal 15°, vorteilhaft um maximal 10° und vorzugweise um maximal 5° von einem rechten Winkel abweicht. Hierdurch kann eine vorteilhafte und insbesondere vorteilhaft einfach zu realisierende Gasführung innerhalb des Brennstoffzellensystems erreicht werden.

Sind die zumindest eine erste Brennstoffzellenvorrichtung und die zumindest eine zweite Brennstoffzellenvorrichtung identisch zueinander ausgebildet, können Herstellungskosten vorteilhaft reduziert werden. Die zumindest eine erste Brennstoffzellenvorrichtung und die zumindest eine zweite Brennstoffzellenvorrichtung sind insbesondere hinsichtlich ihres funktionellen und/oder geometrischen Aufbaus identisch zueinander ausgebildet.

Des Weiteren wird vorgeschlagen, dass das Brennstoffzellensystem zumindest eine Montageplatte umfasst, welche zu einer Befestigung der zumindest einen ersten Brennstoffzellenvorrichtung und/oder der zumindest einen zweiten Brennstoffzellenvorrichtung vorgesehen ist. Die Montageplatte weist vorzugsweise zumindest eine Montageausnehmung auf, welche dazu vorgesehen ist, die zumindest eine erste Brennstoffzellenvorrichtung und/oder die zumindest eine zweite Brennstoffzellenvorrichtung zumindest teilweise aufzunehmen. Die zumindest eine Montageplatte kann insbesondere zumindest teilweise aus einem metallischen und/oder keramischen Material gebildet sein. Insbesondere ist die zumindest eine erste Brennstoffzellenvorrichtung und/oder die zumindest eine zweite Brennstoffzellenvorrichtung zumindest teilweise in die zumindest eine Montageausnehmung einführbar. Vorzugsweise kontaktiert ein Montagefuß der zumindest einen ersten Brennstoffzellenvorrichtung und/oder der zumindest einen zweiten Brennstoffzellenvorrichtung eine Oberfläche der zumindest einen Montageplatte unmittelbar oder mittelbar, beispielsweise über zumindest ein Dichtelement und/oder zumindest eine Dichtmasse. Die Montagefüße der zumindest einen ersten Brennstoffzellenvorrichtung und der zumindest einen zweiten Brennstoffzellenvorrichtung kontaktieren vorzugsweise gegenüberliegende Oberflächen der zumindest einen Montageplatte. Um eine Überleitung eines Gases und/oder eines Gasgemischs und/oder eines Dampfs von einer Seite der zumindest einen Montageplatte auf eine gegenüberliegenden Seite der zumindest einen Montageplatte und insbesondere von dem zumindest einen Montagefuß der zumindest einen ersten Brennstoffzellenvorrichtung zu dem zumindest einen Montagefuß der zumindest einen zweiten Brennstoffzellenvorrichtung zu ermöglichen, weist die zumindest eine Montageplatte vorzugsweise zumindest eine Strömungsausnehmung auf. Hierdurch kann ein vorteilhaft einfacher und/oder insbesondere mechanisch stabiler Aufbau eines Brennstoffzellensystems erreicht werden.

Ferner wird vorgeschlagen, dass die zumindest eine Montageplatte dazu vorgesehen ist, zumindest einen Teil des zumindest einen Kanals auszubilden. Insbesondere ist die zumindest eine Montageplatte dazu vorgesehen, zumindest teilweise eine Außenwandung des zumindest einen Kanals auszubilden. Vorzugsweise schließt die zumindest eine Montageplatte den zumindest einen Kanal in Umfangsrichtung zumindest Abschnittsweise ab. Hierdurch kann auf vorteilhaft einfache Weise ein Kanal für eine Gasführung innerhalb des Brennstoffzellensystems ausgebildet werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Teildarstellung eines Brennstoffzellensystems mit zwei verschieden zueinander ausgebildeten Brennstoffzellenvorrichtungen und
- Fig. 2: eine schematische Teildarstellung eines Brennstoffzellensystems mit zwei identisch ausgebildeten Brennstoffzellenvorrichtungen.

### Beschreibung der Ausführungsbeispiele

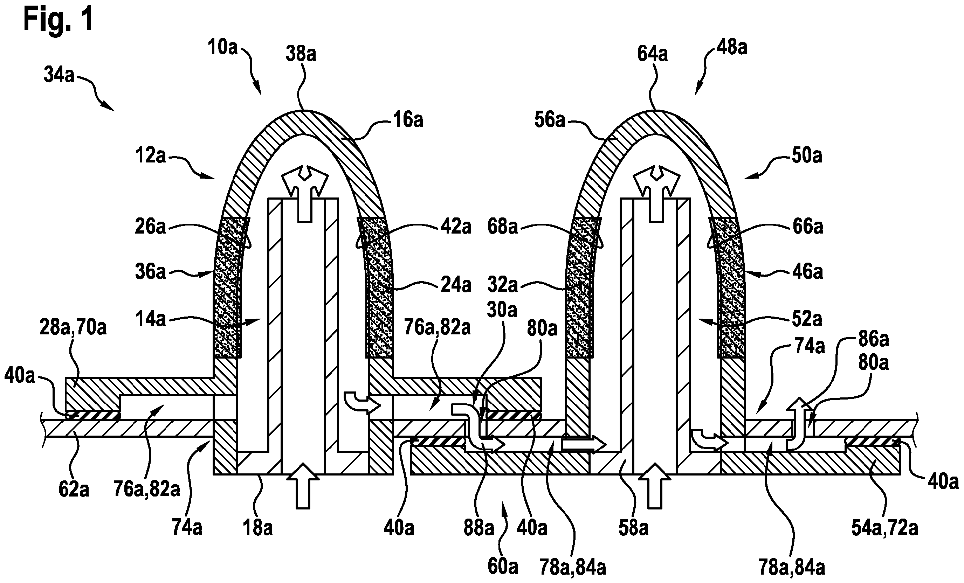

Figur 1 zeigt eine schematische Teildarstellung eines Brennstoffzellensystems 34a mit einer ersten Brennstoffzellenvorrichtung 10a und einer zweiten Brennstoffzellenvorrichtung 48a. Die Brennstoffzellenvorrichtungen 10a, 48a sind jeweils als eine tubulare Brennstoffzellenvorrichtung ausgeführt. Die Brennstoffzellenvorrichtungen 10a, 48a umfassen jeweils eine Brennstoffzelleneinheit 12a, 50a, welche jeweils eine Abdeckhaube 16a, 56a und ein Zuströmelement 18a, 58a aufweisen. Die Abdeckhauben 16a, 56a umfassen jeweils einen hohlzylindrischen Grundkörper 36a, 46a, welche eine kreisförmige Grundfläche aufweisen. Die Grundkörper 36a, 46a der Abdeckhauben 16a, 56a sind an einem oberen Ende 38a, 64a gasdicht ausgeführt. Des Weiteren weisen die Abdeckhauben 16a, 56a einen offen porös ausgebildeten Teilbereich 24a, 32a auf. Auf jeweils eine Innenseite 42a, 66a der Abdeckhauben 16a, 56a ist eine hier lediglich angedeutet dargestellte Funktionsschicht 26a, 68a aufgebracht. Alternativ kann eine Funktionsschicht auch auf eine Außenseite einer Abdeckhaube aufgebracht sein. Die Funktionsschichten 26a, 68a weisen, hier nicht im Detail dargestellt, jeweils eine Anode, eine Kathode und ein zwischen der Anode und der Kathode angeordnetes Elektrolyt auf. Die Brennstoffzelleneinheiten 12a, 50a umfassen ferner jeweils einen als Flansch 70a, 72a ausgebildeten Montagefuß 28a, 54a. Die Montagefüße 28a, 54a sind jeweils einstückig mit den Abdeckhauben 16a, 56a ausgebildet.

Die Zuströmelemente 18a, 58a sind röhrenförmig ausgebildet und ragen in einem montierten Zustanden, wie dargestellt, in die Abdeckhauben 16a, 56a hinein. Die Zuströmelemente 18a, 58a sind dazu vorgesehen, in zumindest einem Betriebszustand einen Reaktanten, insbesondere Wasserstoff, in Gasräume 14a, 52a der Brennstoffzellenvorrichtungen 10a, 48a zu leiten und den Funktionsschichten 26a, 68a zuzuführen. Ein zweiter Reaktant, insbesondere Sauerstoff oder Luft, wird den Funktionsschichten 26a, 68a über die porösen Teilbereiche 24a, 32a der Abdeckhauben 16a, 56a zugeführt.

Die Gasräume 14a, 52a sind, wie dargestellt, jeweils von den Abdeckhauben 16a, 56a und den Zuströmelementen 18a, 58a begrenzt. Die Abdeckhauben 16a, 56a, die Zuströmelemente 18a, 58a und die Montagefüße 28a, 54a sind aus einem identischen, vorzugsweise keramischen, Material gebildet. Hierdurch weisen die Brennstoffzelleneinheit 12a, 50a jeweils durchgehend einen gleichen Wärmeausdehnungskoeffizienten auf, wodurch ein Auftreten thermo-mechanischer Spannungen innerhalb der Brennstoffzelleneinheiten 12a, 50a vermieden werden kann.

Die Brennstoffzellenvorrichtungen 10a, 48a sind mittels der Montagefüße 28a, 54a an einer Montageplatte 62a befestigt. Die Montageplatte 62a weist Montageausnehmungen 74a auf, welche die Brennstoffzellenvorrichtungen 10a, 48a teilweise aufnehmen. Insbesondere die Abdeckhauben 16a, 56a sind teilweise durch die Montageausnehmungen 74a hindurchgeführt. Die zumindest eine Montageplatte 62a kann insbesondere aus einem metallischen und/oder keramischen Material gebildet sein. Die Montagefüße 28a, 54a weisen jeweils einen in Umfangsrichtung einseitig offenen Kanalabschnitt 76a, 78a auf. Die offenen Seiten der Kanalabschnitte 76a, 78a weisen in entgegengesetzte Richtungen. Die offenen Kanalabschnitte 76a, 78a sind in einem montierten Zustand der Brennstoffzellenvorrichtungen 10a, 48a, wie dargestellt, teilweise durch die Montageplatte 62a abgedeckt. Die somit entstehenden Teilkanäle 82a, 84a sind zu einer Gasführung und vorzugsweise zur Abführung eines Reaktionsprodukts, insbesondere Wasserdampf, vorgesehen. Die Montagefüße 28a, 54a kontaktieren gegenüberliegende Oberflächen der zumindest einen Montageplatte 62a. Die Abdeckhauben 16a, 56a weisen ausgehend von der Montageplatte 62a in identischer Richtungen. Alternativ ist es ebenso denkbar, Brennstoffzellenvorrichtungen ohne Verwendung einer Montageplatte zu einem Brennstoffzellensystem zusammenzufassen. Dabei erfolgt eine direkte Kontaktierung von Montagefüßen der Brennstoffzellenvorrichtungen, welche somit einen in Umfangsrichtung geschlossenen Kanal ausbilden.

Um eine Überleitung 88a des Reaktionsprodukts von einer Seite der Montageplatte 62a auf eine gegenüberliegenden Seite der Montageplatte 62a und somit von einem ersten der Teilkanäle 82a zu einem zweiten der Teilkanäle 84a und/oder eine Ausleitung des Reaktionsprodukts aus dem Brennstoffzellensystem 34a zu ermöglichen, weist die zumindest eine Montageplatte 62a Strömungsausnehmungen 80a auf. Durch die Strömungsausnehmungen 80a sind die Teilkanäle 82a, 84a zu einem zusammenhängenden Kanal 30a verbunden. Bei einer Überleitung 88a des Reaktionsprodukts von dem ersten Teilkanal 82a zu dem zweiten Teilkanal 84a und/oder bei einer Ausleitung 86a des Reaktionsprodukts aus dem Brennstoffzellensystem 34a erfährt das Reaktionsprodukt durch eine Richtungsänderung 60a des Kanals 30a jeweils eine Umlenkung um 90°. Der Kanal 30a ist durch eine Dichtmasse und/oder durch Dichtelemente 40a, welche zwischen den Montagefüßen 28a, 54a und der Montageplatte 62a angeordnet ist/sind, gegenüber einer Umgebung abgedichtet. Über den Kanal 30a sind die Brennstoffzellenvorrichtungen 10a, 48a fluidtechnisch miteinander verschaltet. Eine elektrische Verschaltung der Brennstoffzellenvorrichtungen 10a, 48a ist hier der Übersicht halber nicht dargestellt. Diese kann jedoch auf eine dem Fachmann bekannte Weise erfolgen.

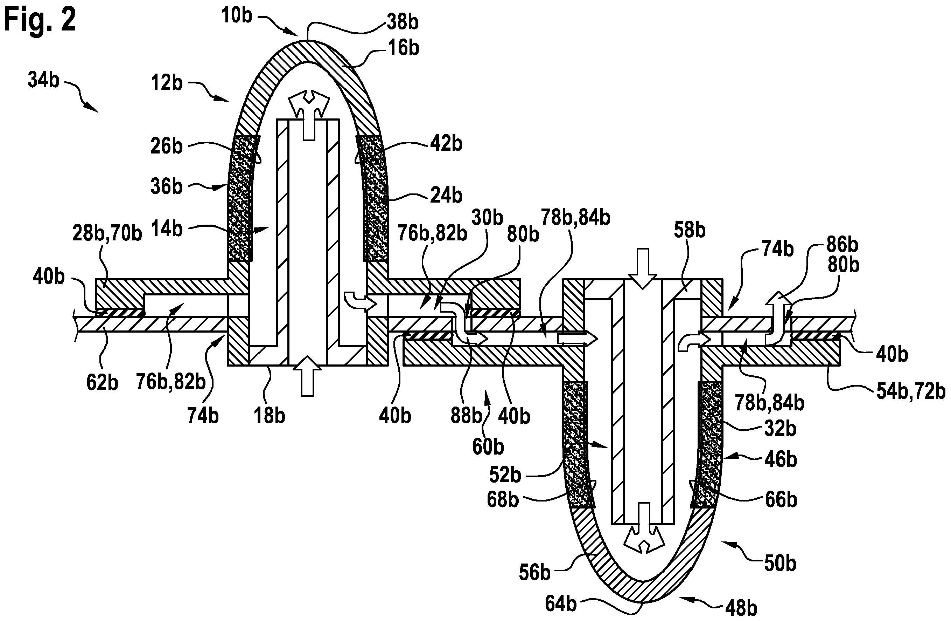

In der Figuren 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In dem Ausführungsbeispiel der Figur 2 ist der Buchstabe a durch den Buchstaben b ersetzt.

Figur 2 zeigt eine schematische Teildarstellung eines Brennstoffzellensystems 34b mit einer ersten Brennstoffzellenvorrichtung 10b und einer zweiten Brennstoffzellenvorrichtung 48b. Die Brennstoffzellenvorrichtungen 10b, 48b sind jeweils als eine tubulare Brennstoffzellenvorrichtung ausgeführt. Die Brennstoffzellenvorrichtungen 10b, 48b sind hinsichtlich ihres funktionellen und geometrischen Aufbaus identisch ausgebildet.

Die Brennstoffzellenvorrichtungen 10b, 48b sind mittels ihrer Montagefüße 28b, 54b an einer Montageplatte 62b befestigt. Die Montageplatte 62b weist Montageausnehmungen 74b auf, welche die Brennstoffzellenvorrichtungen 10b, 48b teilweise aufnehmen. Insbesondere die Abdeckhauben 16b, 56b sind teilweise durch die Montageausnehmungen 74b hindurchgeführt. Die Montagefüße 28b, 54b weisen jeweils einen in Umfangsrichtung einseitig offenen Kanalabschnitt 76a, 78a auf. Die offenen Kanalabschnitte 76b, 78b sind in einem montierten Zustand der Brennstoffzellenvorrichtungen 10b, 48b, wie dargestellt, teilweise durch die Montageplatte 62b abgedeckt. Die somit entstehenden Teilkanäle 82b, 84b sind zu einer Gasführung und vorzugsweise zur Abführung eines Reaktionsprodukts, insbesondere Wasserdampf, vorgesehen. Die Montagefüße 28b, 54b kontaktieren gegenüberliegende Oberflächen der zumindest einen Montageplatte 62b. Die Abdeckhauben 16b, 56b weisen ausgehenden von der Montageplatte 62b in entgegengesetzter Richtung. Alternativ ist bei einer Ausführung mit identischen Brennstoffzellenvorrichtungen es ebenso denkbar, die Brennstoffzellenvorrichtungen ohne Verwendung einer Montageplatte zu einem Brennstoffzellensystem zusammenzufassen. Dabei erfolgt eine direkte Kontaktierung von Montagefüßen der Brennstoffzellenvorrichtungen, welche somit einen in Umfangsrichtung geschlossenen Kanal ausbilden.

## Patentansprüche

1. Brennstoffzellenvorrichtung, insbesondere tubulare Brennstoffzellenvorrichtung, mit einer Brennstoffzelleneinheit (12a, 50a; 12b, 50b), welche zumindest einen Gasraum (14a, 52a; 14b, 52b), welcher dazu vorgesehen ist, in zumindest einem Betriebszustand zumindest einen Reaktanten aufzunehmen, zumindest im Wesentlichen allseitig begrenzt, wobei die Brennstoffzelleneinheit (12a, 50a; 12b, 50b) zumindest einen Montagefuß (28a, 54a; 28b, 54b) umfasst, welcher zumindest in einem montierten Zustand dazu vorgesehen ist, zumindest teilweise zumindest einen Kanal (30a; 30b) auszubilden, welcher zumindest zu einer Gasführung vorgesehen ist, **dadurch gekennzeichnet, dass** der Montagefuß (28a, 28b) zumindest einen offenen Kanalabschnitt (76a,78a; 76b, 78b) aufweist, welcher in einem montierten Zustand durch zumindest einen weiteren Montagefuß (54a, 54b) zumindest einer weiteren Brennstoffzelleneinheit (50a, 50b) und/oder durch zumindest eine Montageplatte (62a, 62b) zu einem in Umfangsrichtung geschlossenen Kanal (30a, 30b) ergänzt ist.

2. Brennstoffzellenvorrichtung nach Anspruch 1, **dadurch gekennzeichnet, dass** die Brennstoffzelleneinheit (12a, 50a; 12b, 50b) zumindest einen Abdeckhaube (16a, 56a; 16b, 56b) aufweist.

3. Brennstoffzellenvorrichtung nach Anspruch 2, **dadurch gekennzeichnet, dass** der zumindest eine Montagefuß (28a, 54a; 28b, 54b) einstückig mit der zumindest einen Abdeckhaube (16a, 56a; 16b, 56b) ausgebildet ist.

4. Brennstoffzellenvorrichtung nach einem der vorhergehenden Ansprüche, **dadurch gekennzeichnet, dass** die Brennstoffzelleneinheit (12a, 50a; 12b, 50b) zumindest ein Zuströmelement (18a, 58a; 18b, 58b) aufweist.

5. Brennstoffzellenvorrichtung nach einem der Ansprüche 2 bis 4, **dadurch gekennzeichnet, dass** die zumindest eine Abdeckhaube (16a, 56a; 16b, 56b) und/oder das zumindest eine Zuströmelement (18a, 58a; 18b, 58b) und/oder der zumindest eine Montagefuß (28a, 54a; 28b, 54b) zumindest im Wesentlichen aus einem zumindest weitgehend identischen Material gebildet sind.

6. Brennstoffzellensystem mit zumindest einer ersten Brennstoffzellenvorrichtung (10a; 10b) nach einem der vorhergehenden Ansprüche und zumindest einer zweiten Brennstoffzellenvorrichtung (48a; 48b) nach einem der vorhergehenden Ansprüche, **dadurch gekennzeichnet, dass** zumindest ein Montagefuß (28a; 28b) der zumindest einen ersten Brennstoffzellenvorrichtung (10a; 10b) und zumindest ein Montagefuß (54a; 54b) der zumindest einen zweiten Brennstoffzellenvorrichtung gemeinsam zumindest einen geschlossenen Kanal (30a; 30b) ausbilden.

7. Brennstoffzellensystem nach Anspruch 6, **dadurch gekennzeichnet, dass** der zumindest eine Kanal (30a; 30b) zumindest eine Richtungsänderung (60a; 60b) aufweist.

8. Brennstoffzellensystem nach Anspruch 6 oder 7, **dadurch gekennzeichnet, dass** die zumindest eine erste Brennstoffzellenvorrichtung (10b) und die zumindest eine zweite Brennstoffzellenvorrichtung (48b) identisch zueinander ausgebildet sind.

9. Brennstoffzellensystem nach einem der Ansprüche 6 bis 8, **gekennzeichnet durch** zumindest eine Montageplatte (62a; 62b), welche zu einer Befestigung der zumindest einen ersten Brennstoffzellenvorrichtung (10a; 10b) und/oder der zumindest einen zweiten Brennstoffzellenvorrichtung (48a; 48b) vorgesehen ist.

10. Brennstoffzellensystem nach Anspruch 9, **dadurch gekennzeichnet, dass** die zumindest eine Montageplatte (62a; 62b) dazu vorgesehen ist, zumindest einen Teil des zumindest einen Kanals (30a; 30b) auszubilden.

## Claims

1. Fuel cell apparatus, in particular tubular fuel cell apparatus, comprising a fuel cell unit (12a, 50a; 12b, 50b) which delimits at least one gas chamber (14a, 52a; 14b, 52b), which is provided for receiving at least one reactant in at least one operating state, at least substantially on all sides, wherein the fuel cell unit (12a, 50a; 12b, 50b) comprises at least one mounting foot (28a, 54a; 28b, 54b) which, at least in a mounted state, is provided for at least partially forming at least one duct (30a; 30b) which is provided at least for carrying gas, **characterized in that** the mounting foot (28a, 28b) has at least one open duct section (76a, 78a; 76b, 78b) which, in a mounted state, is supplemented by at least one further mounting foot (54a, 54b) of at least one further fuel cell unit (50a, 50b) and/or by at least one mounting plate (62a, 62b) to form a duct (30a, 30b) which is closed in the circumferential direction.

2. Fuel cell apparatus according to Claim 1, **characterized in that** the fuel cell unit (12a, 50a; 12b, 50b) has at least one covering hood (16a, 56a; 16b, 56b).

3. Fuel cell apparatus according to Claim 2, **characterized in that** the at least one mounting foot (28a, 54a; 28b, 54b) is integrally formed with the at least one covering hood (16a, 56a; 16b, 56b).

4. Fuel cell apparatus according to one of the preceding claims, **characterized in that** the fuel cell unit (12a, 50a; 12b, 50b) has at least one inflow element (18a, 58a; 18b, 58b).

5. Fuel cell apparatus according to one of Claims 2 to 4, **characterized in that** the at least one covering hood (16a, 56a; 16b, 56b) and/or the at least one inflow element (18a, 58a; 18b, 58b) and/or the at least one mounting foot (28a, 54a; 28b, 54b) are formed at least substantially from an at least largely identical material.

6. Fuel cell system comprising at least one first fuel cell apparatus (10a; 10b) according to one of the preceding claims and at least one second fuel cell apparatus (48a; 48b) according to one of the preceding claims, **characterized in that** at least one mounting foot (28a; 28b) of the at least one first fuel cell apparatus (10a; 10b) and at least one mounting foot (54a; 54b) of the at least one second fuel cell apparatus jointly form at least one closed duct (30a; 30b).

7. Fuel cell system according to Claim 6, **characterized in that** the at least one duct (30a; 30b) has at least one change in direction (60a; 60b).

8. Fuel cell system according to Claim 6 or 7, **characterized in that** the at least one first fuel cell apparatus (10b) and the at least one second fuel cell apparatus (48b) are of identical design to one another.

9. Fuel cell system according to one of Claims 6 to 8, **characterized by** at least one mounting plate (62a; 62b) which is provided for fastening the at least one first fuel cell apparatus (10a; 10b) and/or the at least one second fuel cell apparatus (48a; 48b).

10. Fuel cell system according to Claim 9, **characterized in that** the at least one mounting plate (62a; 62b) is provided for forming at least a portion of the at least one duct (30a; 30b).

## Revendications

1. Dispositif de pile à combustible, en particulier dispositif de pile à combustible tubulaire, doté d'une unité de pile à combustible (12a, 50a ; 12b, 50b), laquelle délimite au moins essentiellement de tous les côtés au moins un espace gazeux (14a, 52a ; 14b, 52b), lequel est prévu de façon à recevoir au moins un réactif dans au moins un état de fonctionnement, dans lequel l'unité de pile à combustible (12a, 50a ; 12b, 50b) comprend au moins un pied de montage (28a, 54a ; 28b, 54b), lequel est prévu dans au moins un état monté de façon à former au moins partiellement au moins un canal (30a ; 30b), lequel est prévu au moins pour une conduite de gaz, **caractérisé en ce que** le pied de montage (28a, 28b) comporte au moins une section de canal ouverte (76a, 78a ; 76b, 78b), laquelle est complétée dans un état monté par au moins un pied montage supplémentaire (54a, 54b) d'au moins une unité de pile à combustible (50a, 50b) supplémentaire et/ou par au moins une plaque de montage (62a, 62b) en un canal fermé (30a, 30b) dans la direction circonférentielle.

2. Dispositif de pile à combustible selon la revendication 1, **caractérisé en ce que** l'unité de pile à combustible (12a, 50a ; 12b, 50b) comporte au moins un capot de protection (16a, 56a ; 16b, 56b).

3. Dispositif de pile à combustible selon la revendication 2, **caractérisé en ce que** l'au moins un pied de montage (28a, 54a ; 28b, 54b) est conçu d'une pièce avec l'au moins un capot de protection (16a, 56a ; 16b, 56b) .

4. Dispositif de pile à combustible selon l'une des revendications précédentes, **caractérisé en ce que** l'unité de pile à combustible (12a, 50a ; 12b, 50b) comporte au moins un élément d'entrée (18a, 58a ; 18b, 58b).

5. Dispositif de pile à combustible selon l'une des revendications 2 à 4, **caractérisé en ce que** l'au moins un capot de protection (16a, 56a ; 16b, 56b) et/ou l'au moins un élément d'entrée (18a, 58a ; 18b, 58b) et/ou l'au moins un pied de montage (28a, 54a ; 28b, 54b) sont conçus essentiellement d'un matériau au moins quasiment identique.

6. Système de pile à combustible doté d'au moins un premier dispositif de pile à combustible (10a ; 10b) selon l'une des revendications précédentes et d'au moins un deuxième dispositif de pile à combustible (48a ; 48b) selon l'une des revendications précédentes, **caractérisé en ce qu'**au moins un pied de montage (28a ; 28b) de l'au moins un premier dispositif de pile à combustible (10a ; 10b) et au moins un pied de montage (54a ; 54b) de l'au moins un deuxième dispositif de pile à combustible réalisent ensemble au moins un canal fermé (30a ; 30b).

7. Système de pile à combustible selon la revendication 6, **caractérisé en ce que** l'au moins un canal (30a ; 30b) comporte au moins un changement de direction (60a ; 60b).

8. Système de pile à combustible selon la revendication 6 ou 7, **caractérisé en ce que** l'au moins un premier dispositif de pile à combustible (10b) et l'au moins un deuxième dispositif de pile à combustible (48b) sont réalisés de manière identique l'un à l'autre.

9. Système de pile à combustible selon l'une des revendications 6 à 8, **caractérisé par** au moins une plaque de montage (62a ; 62b), laquelle est prévue pour une fixation de l'au moins un premier dispositif de pile à combustible (10a ; 10b) et/ou de l'au moins un deuxième dispositif de pile à combustible (48a ; 48b).

10. Système de pile à combustible selon la revendication 9, **caractérisé en ce que** l'au moins une plaque de montage (62a ; 62b) est prévue de façon à réaliser au moins une partie de l'au moins un canal (30a ; 30b)
